# EUROPÄISCHE PATENTSCHRIFT

(11) **EP 1 103 161 B1**
(45) Veröffentlichungstag und Bekanntmachung des Hinweises auf die Patenterteilung: **07.11.2007**
(21) Anmeldenummer: 99945890.4
(22) Anmeldetag: 02.07.1999
(51) Int. Cl.: H04Q 11/04, H04M 7/00, H04L 12/64

(54) **VERFAHREN ZUM UMSCHALTEN EINER ERSTEN AUF EINE ZWEITE KOMMUNIKATIONSVERBINDUNG ZWISCHEN ZWEI KOMMUNIKATIONSSYSTEMEN**
METHOD FOR SWITCHING A FIRST COMMUNICATION LINK TO A SECOND COMMUNICATION LINK BETWEEN TWO COMMUNICATION SYSTEMS
PROCEDE POUR COMMUTER UNE PREMIERE LIAISON DE COMMUNICATION SUR UNE SECONDE LIAISON DE COMMUNICATION ENTRE DEUX SYSTEMES DE COMMUNICATION

(30) Priorität: 03.08.1998 DE 19834975
(43) Veröffentlichungstag der Anmeldung: 30.05.2001
(73) Patentinhaber: Siemens Enterprise Communications GmbH & Co. KG, 81379 München (DE)
(72) Erfinder: WEHREND, Klaus, D-82223 Eichenau (DE); WILLE, Klaus, D-81679 München (DE)
(86) Internationale Anmeldenummer: PCT/DE1999/002043
(87) Internationale Veröffentlichungsnummer: WO 2000/008891

(56) Entgegenhaltungen:
- EP-A- 0 732 835
- EP-A- 0 848 560
- EP-A- 0 907 280
- WO-A-97/27692
- WO-A-97/31492
- HOUGHTON T F ET AL: "A PACKET TELEPHONY GATEWAY FOR PUBLIC NETWORK OPERATORS" PROCEEDINGS OF THE INTERNATIONAL SWITCHING SYMPOSIUM (ISS '97), Bd. 2, Seiten 35-44, XP000704453 TORONTO
- ESTRIN J ET AL: "MULTIMEDIA OVER IP: SPECS SHOW THE WAY" DATA COMMUNICATIONS, Bd. 25, Nr. 10, Seite 93-96,98 XP000624059 NEW YORK ISSN: 0363-6399

## Beschreibung

Aufgrund einer zunehmenden globalen Ausrichtung von Unternehmen nimmt die Nutzung von Telekommunikationsdiensten zur Übermittlung von Sprache und Daten ständig zu. Dies hat zur Folge, daß die durch diese Telekommunikationsdienste verursachten Kosten ständig steigen und zu einem erheblichen Kostenfaktor für die Unternehmen werden, die Möglichkeiten zur Reduzierung dieser Kosten suchen. Eine Möglichkeit Daten kostengünstig und weltweit übermitteln zu können, bieten globale Computernetzwerke, wie beispielsweise das 'Internet'.

In dem US-Patent US 6 751 210 wurde bereits ein Verfahren vorgeschlagen, durch welches eine Übermittlung von im Rahmen einer Sprachverbindung zu übermittelnden Daten über ein Computernetzwerk, wie beispielsweise dem 'Internet' ermöglicht wird. Des weiteren wurde vorgeschlagen, daß in Fällen, in denen im Rahmen einer realzeitkritischen Übertragung von Sprachdaten über das Computernetzwerk eine ausreichende Übertragungsgüte nicht mehr zugesichert werden kann, eine neue Verbindung über ein alternatives Kommunikationsnetz - beispielsweise ein ISDN-orientiertes Kommunikationsnetz (Integrated Services Digital Network) - eingerichtet wird, und die zu übermittelnden Daten im weiteren über diese neue Verbindung übermittelt werden.

In des Druckschrift EP-A-0 848 560 wird ein Verfahren angegeben, bei dem eine Sprachverbindung über ein zweites Netz geführt wird, wenn in einem ersten Netz die Dienstgüte für diese Verbindung zu schlecht wird.

Die Druckschrift WO-A-97/27692 offenbart ein Verfahren, bei dem eine Teilstrecke einer Sprachverbindung über das Internet geführt wird. Aufang und Ende dieser Teilstrecke werden unter Verkehrsaspekten im Internet optimiert.

Aufgabe der folgenden Erfindung ist es, ein Verfahren anzugeben, durch welches eine neue Verbindung über ein Telekommunikationsnetz eingerichtet wird, wobei die Unterbrechungszeit zum Umschalten von einer bisherigen, über ein Computernetz geführten Verbindung auf die neue, über ein Telekommunikationsnetz geführte Verbindung minimiert werden kann.

Die Lösung der Aufgabe erfolgt erfindungsgemäß mit den Merkmalen des Patentanspruchs 1.

Zum besseren Verständnis einer Übermittlung von im Rahmen einer Sprachverbindung zu übermittelnden Daten über ein Computernetzwerk, wie dem 'Internet', erscheint es erforderlich zunächst noch einmal auf bekannte Prinzipien näher einzugehen.

Empfängt ein erstes Kommunikationssystem, welches einerseits mit einem Telekommunikationsnetz, wie dem ISDN-Kommunikationsnetz und andererseits über eine erste Internet-Anschlußeinheit - in der Literatur häufig mit TIS (Telephony Internet Server) abgekürzt - mit dem Internet verbunden ist eine, ein gerufenes Endgerät identifizierende Rufnummer von einem rufenden Endgerät, so wird überprüft, ob die empfangene Rufnummer, bzw. das Ziel identifizierende Anteile der empfangenen Rufnummer in einer im Kommunikationssystem gespeicherten Liste eingetragen sind. Diese Liste enthält den Rufnummern, bzw. das Ziel identifizierende Anteile dieser Rufnummern zugeordnete Routinginformationen, die bezeichnen, daß bereits eine Verbindung zur Übermittlung von Sprachdaten über das 'Internet' eingerichtet wurde.

Ist die empfangene Rufnummer, bzw. das Ziel identifizierende Anteile der empfangenen Rufnummer nicht in der Liste hinterlegt, so sendet das erste Kommunikationssystem über das Telekommunikationsnetz eine Signalisierungsmeldung an ein zweites Kommunikationssystem, welchem das gerufene Endgerät zugeordnet ist. Diese Signalisierungsmeldung signalisiert dem zweiten Kommunikationssystem, daß das erste Kommunikationssystem über eine erste Internet-Anschlußeinheit mit dem 'Internet' verbunden ist. Ist das zweite Kommunikationssystem ebenfalls über eine zweite Internet-Anschlußeinheit mit dem 'Internet' verbunden, signalisiert das zweite Kommunikationssystem dies dem ersten Kommunikationssystem zusammen mit der Internet-Adresse der zweiten Internet-Anschlußeinheit in einer entsprechenden Antwortmeldung.

Empfängt das erste Kommunikationssystem innerhalb einer einstellbaren Zeitspanne keine Antwortmeldung, so wird die Verbindung zwischen dem rufenden und dem gerufenen Endgerät in herkömmlicher Weise über das Telekommunikationsnetz eingerichtet.

Ist die am ersten Kommunikationssystem empfangene Rufnummer, bzw. das Ziel identifizierende Anteile der empfangenen Rufnummer jedoch in der Liste eingetragen, oder empfängt das erste Kommunikationssystem innerhalb der einstellbaren Zeitspanne eine Antwortmeldung, so übermittelt das erste Kommunikationssystem die Internet-Adresse der zweiten Internet-Anschlußeinheit an die erste Internet-Anschlußeinheit. Ist die, über die Internet-Verbindung zwischen der ersten Internet-Anschlußeinheit und der zweiten Internet-Anschlußeinheit zur Verfügung gestellte Übertragungsbandbreite ausreichend für eine realzeitkritische Übertragung von Sprachdaten, so verpackt die erste Internet-Anschlußeinheit die vom rufenden Endgerät übermittelten und gegebenenfalls im ersten Kommunikationssystem digitalisierten Sprachdaten gemäß dem IP-Protokoll (Internet Protokoll) in Datenpakete und übermittelt diese anhand der Internet-Adresse der zweiten Internet-Anschlußeinheit an die zweite Internet-Anschlußeinheit. Die zweite Internet-Anschlußeinheit entpackt die in den übermittelten Datenpaketen enthaltenen Sprachdaten, wandelt sie in ein für den weiteren Transport vorgesehenes zeitschlitz-orientiertes Datenformat (TDM: Time Division Multiplex) um, und leitet sie über das zweite Kommunikationssystem an das gerufene Endgerät weiter. Eine Übermittlung der Sprachdaten vom gerufenen Endgerät zum rufenden Endgerät erfolgt in analoger Weise.

Stellt das erste Kommunikationssystem, bzw. die erste Internet-Anschlußeinheit während der Gesprächsverbindung fest, daß die Übertragungsqualität - in der Literatur häufig auch mit 'Quality Of Service QoS' bezeichnet - der Internet-Verbindung zwischen der ersten und der zweiten Internet-Anschlußeinheit nicht mehr für die realzeitkritische Übermittlung von Sprachdaten im Rahmen der Gesprächsverbindung zwischen dem rufenden und dem gerufenen Endgerät ausreicht, so wird in der Regel ausgehend vom ersten Kommunikationssystem eine neue Verbindung über das Telekommunikationsnetz zum zweiten Kommunikationssystem aufgebaut und die Datenübermittlung anschließend auf diese neue Verbindung umgekoppelt. Die Überwachung der Übertragungsqualität der Internet-Verbindung zwischen der ersten und der zweiten Internet-Anschlußeinheit kann alternativ auch durch das zweite Kommunikationssystem, bzw. durch die zweite Internet-Anschlußeinheit erfolgen.

Allgemein ist über beide Verbindungen eine bidirektionale Datenübermittlung zwischen dem ersten und dem zweiten Kommunikationssystem möglich. Hierzu bestehen beide bidirektionalen Verbindungen aus zwei unidirektionale Verbindungen über welche, die an der Verbindung beteiligten Kommunikationssysteme jeweils Daten senden bzw. die Daten empfangen. Diese beiden unidirektionalen Verbindungen werden im allgemeinen als Sendeweg und als Empfangsweg bezeichnet.

Bei einer Umkopplung der bestehenden Verbindung auf die neue Verbindung in der herkömmlichen Weise, bei der ein gleichzeitiges Umschalten des Sendewegs und des Empfangswegs sowohl auf der rufenden als auch auf der gerufenen Seite erfolgt, entstehen durch Meldungslaufzeiten der zwischen den beteiligten Kommunikationssystemen für die Umkopplung zu übermittelnden Meldungen längere Unterbrechungszeiten, in denen keine Datenübermittlung möglich ist. Diese Unterbrechungszeiten können in größeren Telekommunikationsnetzen, bei einer bestimmten Anzahl von zu durchlaufenden Netzknoten im Sekundenbereich liegen und sind somit nicht mehr akzeptabel.

Ein wesentlicher Vorteil des erfindungsgemäßen Verfahrens besteht nun darin, daß das Verfahren auf einfache Weise auch in bereits bestehende Systeme implementiert werden kann.

Vorteilhafte Weiterbildungen der Erfindung sind in den Unteransprüchen angegeben.

Ein Ausführungsbeispiel der Erfindung wird im folgenden anhand der Zeichnung näher erläutert.

Dabei zeigen:
- Fig. 1:: ein Strukturbild zur schematischen Darstellung eines Kommunikationsnetzes mit den wesentlichen am erfindungsgemäßen Verfahren beteiligten Funktionseinheiten;
- Fig. 2:: ein Ablaufdiagramm zur Veranschaulichung der bei einem Umschalten von einer bestehenden auf eine neue Verbindung ablaufenden Verfahrensschritte.

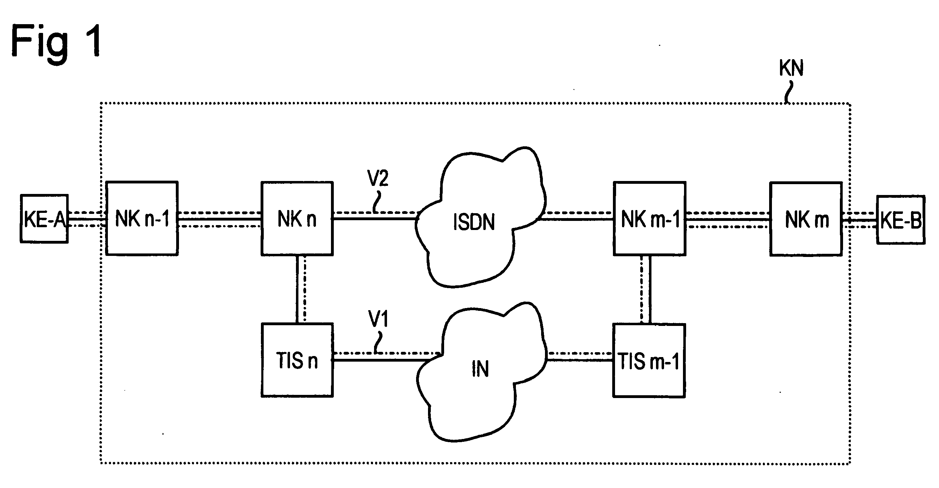

Fig. 1 zeigt in einer schematischen Darstellung ein Kommunikationsnetz KN mit darin angeordneten Netzknoten NKn-1, NKn, NKm-1, NKm. Die Netzknoten sind dabei beispielsweise als herkömmliche private Vermittlungsanlagen - in der Literatur häufig mit PBX (Privat Branche Exchange) abgekürzt - ausgestaltet. Eine Verbindung der Netzknoten NKn-1, NKn, NKm-1, NKm untereinander erfolgt beispielsweise über sogenannte 'PCM-Highways'. Im allgemeinen umfaßt ein 'PCM-Highway' zum einen 30 Nutzdatenkanäle, welche als ISDN-orientierte B-Kanäle mit einer Übertragungsrate von 64 kBit/s ausgestaltet sind und zum anderen einen Signalisierungskanal, welcher als ISDNorientierter D-Kanal mit einer Übertragungsrate von 64 kBit/s ausgestaltet ist. Über einen Ursprungs-Netzknoten NKn-1 ist ein erstes Kommunikationsendgerät KE-A und über einen Ziel-Netzknoten NKm ist ein zweites Kommunikationsendgerät KE-B mit dem Kommunikationsnetz KN verbunden.

Ein erster und ein zweiter im Kommunikationsnetz KN angeordneter Netzknoten NKn; NKm-1 sind über ein ISDN-orientiertes Kommunikationsnetz ISDN miteinander verbunden. Des weiteren weisen der erste und der zweite Netzknoten NKn, NKm-1 jeweils eine Internet-Anschlußeinheit TISn, TISm-1 auf, über die sie jeweils mit einem auf einer paket-orientierten Datenübermittlung basierenden Netz, wie beispielsweise dem 'Internet' IN verbunden sind.

Empfängt der erste Netzknoten NKn eine, vom ersten Kommunikationsendgerät KE-A gesendete und das zweite Kommunikationsendgerät KE-B identifizierende Rufnummer, so wird in der Regel eine erste Verbindung V1 zwischen dem ersten Kommunikationsendgerät KE-A und dem zweiten Kommunikationsendgerät KE-B über das 'Internet' IN in der oben beschriebenen Weise aufgebaut. Alternativ kann in Fällen, in denen eine Datenübermittlung über das 'Internet' IN - beispielsweise aufgrund einer nicht ausreichenden Übertragungsbandbreite - nicht möglich ist, die Datenübermittlung über eine zweite Verbindung V2 zwischen dem ersten Kommunikationsendgerät KE-A und dem zweiten Kommunikationsendgerät KE-B über das ISDN-orientierte Kommunikationsnetz ISDN erfolgen.

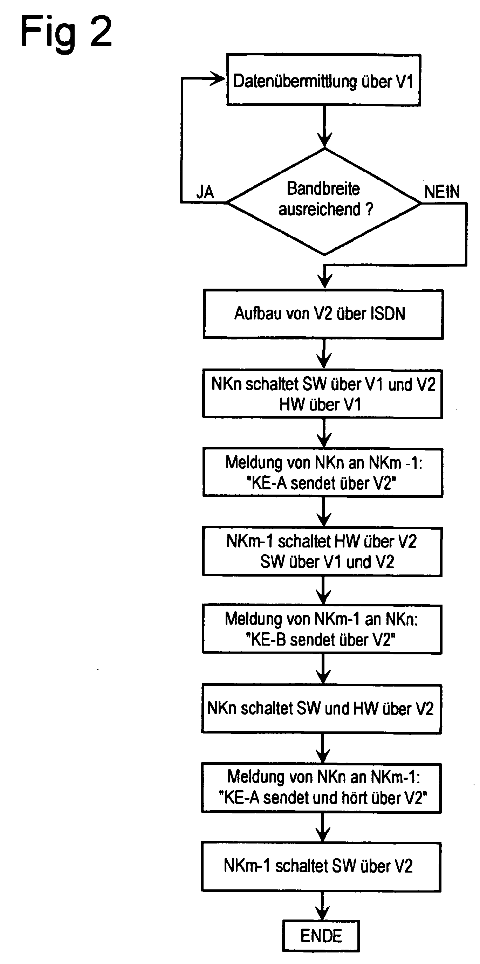

Fig. 2 zeigt ein Ablaufdiagramm zur Veranschaulichung der bei einem Umschalten von einer bereits bestehen Verbindung auf eine neu aufgebaute Verbindung ablaufenden Verfahrensschritte. Erfolgt eine bidirektionale Übermittlung von im Rahmen einer Sprachverbindung zwischen dem ersten und dem zweiten Kommunikationsendgerät KE-A, KE-B zu übermittelnden Daten über die erste Verbindung V1, so findet durch den ersten Netzknoten NKn, bzw. durch die zugehörige Internet-Anschlußeinheit TISn eine laufende Überprüfung der Übertragungsqualität der Internet-Verbindung zwischen der ersten und der zweiten Internet-Anschlußeinheit TISn, TISm-1 statt. Eine Überprüfung der Übertragungsqualität der Internet-Verbindung kann alternativ auch durch den zweiten Netzknoten NKm-1, bzw. durch die zugehörige Internet-Anschlußeinheit TISm-1 erfolgen. Die Übertragungsqualität läßt sich beispielsweise durch die Messung der Anzahl der auf der Internet-Verbindung verlorengegangenen IP-Pakete ermitteln. Eine Messung kann dabei durch ein, parallel zu einem für die Übermittlung von Sprachdaten verwendeten RTP-Protokoll (Realtime Transport Protokoll) ausgeführtes RTCP-Protokoll (Realtime Transport Control Protokoll) realisiert werden.

Wird während der Gesprächsverbindung zwischen dem ersten Kommunikationsendgerät KE-A und dem zweiten Kommunikationsendgerät KE-B durch den ersten Netzknoten NKn, bzw. durch die zugehörige Internet-Anschlußeinheit TISn - alternativ durch den zweiten Netzknoten NKm-1, bzw. durch die zugehörige Internet-Anschlußeinheit TISm-1- festgestellt, daß die für die Gesprächsverbindung benötigte Übertragungsqualität durch das Internet IN nicht mehr bereitgestellt werden kann, so wird eine neue Verbindung - im weiteren mit zweiter Verbindung V2 bezeichnet - über das ISDN-orientierte Kommunikationsnetz ISDN zwischen dem ursprungsseitigen ersten Netzknoten NKn und dem zielseitigen zweiten Netzknoten NKm-1 aufgebaut, wobei die Durchschaltung zwischen dem ersten Kommunikationsendgerät KE-A und dem zweiten Kommunikationsendgerät KE-B weiterhin über die erste Verbindung V1 erfolgt. Alternativ kann ein Verbindungsaufbau über das ISDN-orientierte Kommunikationsnetz ISDN auch zwischen einem beliebigen ursprungsseitigen Netzknoten - beispielsweise dem Ursprungs-Netzknoten NKn-1 - und einem beliebigen zielseitigen Netzknoten - beispielsweise dem Ziel-Netzknoten NKm - erfolgen.

Sowohl über die erste Verbindung V1 als auch über die zweite Verbindung V2 ist eine bidirektionale Datenübermittlung zwischen dem ersten Kommunikationsendgerät KE-A und dem zweiten Kommunikationsendgerät KE-B möglich. Hierzu besteht sowohl die erste Verbindung V1 als auch die zweite Verbindung V2 aus zwei unidirektionalen Verbindungen über welche, die an der Verbindung beteiligten Kommunikationsendgeräte KE-A, KE-B jeweils Daten senden bzw. die Daten empfangen.

Diese unidirektionalen Verbindungen werden im allgemeinen als Sendeweg - im weiteren im Zusammenhang mit der Sprachverbindung als Sprechweg SW bezeichnet - und als Empfangsweg - im weiteren im Zusammenhang mit der Sprachverbindung als Hörweg HW bezeichnet - bezeichnet. Hierbei entspricht der Sprechweg SW des ersten Kommunikationsendgerätes KE-A dem Hörweg HW des zweiten Kommunikationsendgerätes KE-B und der Hörweg HW des ersten Kommunikationsendgerätes KE-A dem Sprechweg SW des zweiten Kommunikationsendgerätes KE-B.

In einem nächsten Schritt schaltet der erste Netzknoten NKn den Sprechweg SW des ersten Kommunikationsendgerätes KE-A derart, daß Daten sowohl über die erste Verbindung V1 als auch über die zweite Verbindung V2 gesendet werden - in der Literatur häufig mit 'Broadcast' bezeichnet. Daten können vom ersten Kommunikationsendgerätes KE-A aber weiterhin nur über die erste Verbindung V1 empfangen werden. Anschließend sendet der erste Netzknoten NKn eine Nachricht "KE-A sendet über V2" an den zweiten Netzknoten NKm-1, die den zweiten Netzknoten NKm-1 darüber informiert, daß das erste Kommunikationsendgerät KE-A Daten im folgenden zusätzlich zur ersten Verbindung V1 auch über die zweite Verbindung V2 sendet.

Nach Empfang der Nachricht "KE-A sendet über V2" schaltet der zweite Netzknoten NKm-1 den Hörweg HW des zweiten Kommunikationsendgerätes KE-B derart, daß Daten vom ersten Kommunikationsendgerät KE-A ausschließlich über die zweite Verbindung V2 empfangen werden. Des weiteren schaltet der zweite Netzknoten NKm-1 den Sprechweg SW des zweiten Kommunikationsendgerätes KE-B derart, daß Daten sowohl über die erste Verbindung V1 als auch über die zweite Verbindung V2 gesendet werden. Anschließend sendet der zweite Netzknoten NKm-1 eine weitere Nachricht "KE-B sendet über V2" an den ersten Netzknoten NKn, die den ersten Netzknoten NKn darüber informiert, daß das zweite Kommunikationsendgerät KE-B Daten im folgenden zusätzlich zur ersten Verbindung V1 auch über die zweite Verbindung V2 sendet.
Empfängt der erste Netzknoten NKn die weitere Nachricht "KE-B sendet über V2", schaltet er den Hörweg HW des ersten Kommunikationsendgerätes KE-A derart, daß Daten ausschließlich über die zweite Verbindung V2 empfangen werden. Des weiteren schaltet der erste Netzknoten NKn den Sprechweg SW des ersten Kommunikationsendgerätes KE-A derart, daß die Daten ausschließlich über die zweite Verbindung V2 gesendet werden. Anschließend übermittelt der erste Netzknoten NKn eine Quittungsmeldung "KE-A sendet und hört über V2" an den zweiten Netzknoten NKm-1. Nach Empfang der Quittungsmeldung "KE-A sendet und hört über V2" schaltet der zweite Netzknoten Nkm-1 den Sprechweg SW des zweiten Kommunikationsendgerätes KE-A derart, daß Daten ebenfalls ausschließlich über die zweite Verbindung V2 gesendet werden. Somit erfolgt ein bidirektionaler Datentransfer im Rahmen der Kommunikationsverbindung zwischen dem ersten Kommunikationsendgerät KE-A und dem zweiten Kommunikationsendgerät KE-B ausschließlich über die zweite Verbindung V2. Anschließend kann die erste Verbindung V1 ausgelöst, bzw. eventuell von der erste Verbindung V1 benötigte Ressourcen freigegeben werden.

Eine Übermittlung der für ein Umschalten der ersten Verbindung V1 auf die zweite Verbindung V2 zu übermittelnden Nachricht "KE-A sendet über V2", weiteren Nachricht "KE-B sendet über V2" und Quittungsmeldung "KE-A sendet und hört über V2" kann alternativ über den Signalisierungsweg der ersten Verbindung V1 als auch über den Signalisierungsweg (D-Kanal) der zweiten Verbindung V2 erfolgen.

Mit diesem erfindungsgemäßen Verfahren zum Umschalten der bereits bestehenden, über das Internet IN geführten ersten Verbindung V1 auf die neue, über das ISDN-orientierte Kommunikationsnetz ISDN geführte zweite Verbindung V2 reduziert sich die Unterbrechungszeit auf die durch die physikalischen Umschaltzeiten innerhalb eines Netzknotens NKn, NKm-1 vorgegebenen Zeiten. Diese Umschaltzeiten liegen im Millisekundenbereich und sind somit für die an einer Gesprächsverbindung beteiligten Kommunikationsteilnehmer nicht wahrnehmbar.

## Patentansprüche

1. Verfahren zum Umschalten einer ersten auf eine zweite Kommunikationsverbindung (V1, V2), die jeweils zwischen einem ersten und einem zweiten Kommunikationssystem (NKn, NKm-1) bestehen,
wobei die erste und die zweite Kommunikationsverbindung (V1, V2) zu jedem Kommunikationssystem (NKn, NKm-1) jeweils einen Sendeweg (SW), über den dieses Kommunikationssystem (NKn, NKm-1) sendet und einen Empfangsweg (HW), über den dieses Kommunikationssystem (NKn, NKm-1) empfängt, aufweisen, **dadurch gekennzeichnet, daß** nacheinander folgende Schritte ausgeführt werden,
a) das erste Kommunikationssystem (NKn) wird im Hinblick auf seine Sendewege (SW) derart gesteuert, daß sowohl über die erste als auch die zweite Kommunikationsverbindung (V1, V2) gesendet wird,
b) das zweite Kommunikationssystem (NKm-1) wird im Hinblick auf seine Empfangswege (HW) und seine Sendewege (SW) derart gesteuert, daß nur über die zweite Kommunikationsverbindung (V2) empfangen und sowohl über die erste als auch die zweite Kommunikationsverbindung (V1, V2) gesendet wird,
c) das erste Kommunikationssystem (NKn) wird im Hinblick auf seine Empfangswege (HW) und seine Sendewege (SW) derart gesteuert, daß nur über die zweite Kommunikationsverbindung (V2) empfangen und gesendet wird,
d) das zweite Kommunikationssystem (NKm-1) wird im Hinblick auf seine Sendewege (SW) derart gesteuert, daß nur über die zweite Kommunikationsverbindung (V2) gesendet wird.

2. Verfahren nach Anspruch 1,
**dadurch gekennzeichnet,**
**daß** die erste Kommunikationsverbindung (V1) über ein erstes Kommunikationsnetz (IN) und die zweite Kommunikationsverbindung (V2) über ein zweites Kommunikationsnetz (ISDN) eingerichtet wird.

3. Verfahren nach Anspruch 2,
**dadurch gekennzeichnet,**
**daß** das erste Kommunikationsnetz (IN) ein, auf einer paket-orientierten Datenübermittlung basierendes Netz und das zweite Kommunikationsnetz (ISDN) ein ISDN-orientiertes Kommunikationsnetz sind.

4. Verfahren nach Anspruch 3,
**dadurch gekennzeichnet,**
**daß** ein Einrichten der zweiten Kommunikationsverbindung (V2) und ein Umschalten der ersten Kommunikationsverbindung (V1) auf die zweite Kommunikationsverbindung (V2) in Fällen erfolgt, in denen eine, durch das erste Kommunikationsnetz (IN) zur Verfügung gestellte Übertragungsqualität einen Grenzwert unterschreitet.

5. Verfahren nach Anspruch 4,
**dadurch gekennzeichnet,**
**daß** die übertragungsqualität der über das erste Kommunikationsnetz (IN) geführten ersten Kommunikationsverbindung (V1) durch die Anzahl der im ersten Kommunikationsnetz (IN) verlorengegangenen Datenpakete ermittelt wird.

6. Verfahren nach einem der Ansprüche 3 bis 5,
**dadurch gekennzeichnet,**
**daß** eine Übermittlung der Daten über das erste Kommunikationsnetz (IN) mittels des RTP-Protokolls (Realtime Transport Protokoll) realisiert wird.

7. Verfahren nach einem der vorhergehenden Ansprüche,
**dadurch gekennzeichnet,**
**daß** für ein Umschalten der ersten auf die zweite Kommunikationsverbindung (V1, V2) zu übermittelnde Meldungen über einen Signalisierungsweg der ersten Kommunikationsverbindung (V1) übermittelt werden.

8. Verfahren nach einem der Ansprüche 1 bis 6,
**dadurch gekennzeichnet**
**daß** für ein Umschalten der ersten auf die zweite Kommunikationsverbindung (V1, V2) zu übermittelnde Meldungen über einen Signalisierungsweg der zweiten Kommunikationsverbindung (V2) übermittelt werden.

## Claims

1. Method for switching from a first to a second communication connection (V1, V2), these existing in each case between a first and a second communication system (NKn, NKm-1),
wherein the first and the second communication connection (V1, V2) to each communication system (NKn, NKm-1) in each case features a send path (SW) via which this communication system (NKn, NKm-1) sends and a receive path (HW) via which this communication system (NKn, NKm-1) receives,
**characterised in that**
the following steps are executed consecutively:
a) the first communication system (NKn) is controlled with regard to its send paths (SW) such that sending occurs via both the first and the second communication connection (V1, V2),
b) the second communication system (NKm-1) is controlled with regard to its receive paths (HW) and its send paths (SW) such that receiving only occurs via the second communication connection (V2) and sending occurs via both the first and the second communication connection (V1, V2),
c) the first communication system (NKn) is controlled with regard to its receive paths (HW) and its send paths (SW) such that receiving and sending only occur via the second communication connection (V2), and
d) the second communication system (NKm-1) is controlled with regard to its send paths (SW) such that sending only occurs via the second communication connection (V2).

2. Method according to claim 1,
**characterised in that**
the first communication connection (V1) is set up via a first communication network (IN) and the second communication connection (V2) is set up via a second communication network (ISDN).

3. Method according to claim 2,
**characterised in that**
the first communication network (IN) is a network which is based on a packet-oriented data transfer, and the second communication network (ISDN) is an ISDN-oriented communication network.

4. Method according to claim 3,
**characterised in that**
the second communication connection (V2) is set up and switching from the first communication connection (V1) to the second communication connection (V2) takes place if a transmission quality which is provided by the first communication network (IN) falls below a threshold value.

5. Method according to claim 4,
**characterised in that**
the transmission quality of the first communication connection (V1) which is routed via the first communication network (IN) is determined by means of the number of data packets that are lost in the first communication network (IN).

6. Method according to one of claims 3 to 5,
**characterised in that**
a transfer of the data via the first communication network (IN) is realised by means of the RTP protocol (Realtime Transport Protocol).

7. Method according to one of the preceding claims,
**characterised in that**
messages which must be transferred for the purpose of switching from the first to the second communication connection (V1, V2) are transferred via a signalling path of the first communication connection (V1).

8. Method according to one of claims 1 to 6,
**characterised in that**
messages which must be transferred for the purpose of switching from the first to the second communication connection (V1, V2) are transferred via a signalling path of the second communication connection (V2).

## Revendications

1. Procédé pour commuter une première sur une deuxième liaison de communication (V1, V2), lesquelles liaisons existent entre un premier et un deuxième systèmes de communication (NKn, NKm-1), les première et deuxième liaisons de communication (V1, V2) comportant respectivement, vers chaque système de communication (NK, NKm-1), un chemin d'émission (SW) via lequel ce système de communication (NKn, NKm-1) émet et un chemin de réception (HW) via lequel ce système de communication (NKn, NKm-1) reçoit, **caractérisé en ce que** les étapes suivantes sont exécutées successivement:
a) le premier système de communication (NKn) est commandé de manière telle, en ce qui concerne ses chemins d'émission (SW), qu'il y a émission non seulement via la première, mais aussi via la deuxième liaison de communication (V1, V2),
b) le deuxième système de communication (NKm-1) est commandé de manière telle, en ce qui concerne ses chemins de réception (HW) et ses chemins d'émission (SW), qu'il y a réception seulement via la deuxième liaison de communication (V2) et qu'il y a émission non seulement via la première, mais aussi via la deuxième liaison de communication (V1, V2),
c) le premier système de communication (NKn) est commandé de manière telle, en ce qui concerne ses chemins de réception (HW) et ses chemins d'émission (SW), qu'il y a émission et réception uniquement via la deuxième liaison de communication (V2),
d) le deuxième système de communication (NKm-1) est commandé de manière telle, en ce qui concerne ses chemins d'émission (SW), qu'il y a émission uniquement via la deuxième liaison de communication (V2) .

2. Procédé selon la revendication 1, **caractérisé en ce que** la première liaison de communication (V1) est établie via un premier réseau de communication (IN) et la deuxième liaison de communication (V2), via un deuxième réseau de communication (ISDN).

3. Procédé selon la revendication 2, **caractérisé en ce que** le premier réseau de communication (IN) est un réseau basé sur une transmission de données orientée paquets et le deuxième réseau de communication (ISDN), un réseau de communication orienté ISDN.

4. Procédé selon la revendication 3, **caractérisé en ce qu'**un établissement de la deuxième liaison de communication (V2) et une commutation de la première liaison de communication (V1) sur la deuxième liaison de communication (V2) se produisent dans les cas où une qualité de transmission mise à disposition par le premier réseau de communication (IN) tombe en dessous d'une valeur limite.

5. Procédé selon la revendication 4, **caractérisé en ce que** la qualité de transmission de la première liaison de communication (V1) passant par le premier réseau de communication (IN) est déterminée par le nombre des paquets de données qui se sont perdus dans le premier réseau de communication (IN).

6. Procédé selon l'une des revendications 3 à 5, **caractérisé en ce qu'**une transmission de données via le premier réseau de communication (IN) est réalisée au moyen du protocole RTP (Realtime Transport Protocol).

7. Procédé selon l'une des revendications précédentes, **caractérisé en ce que** des messages à transmettre aux fins d'une commutation de la première sur la deuxième liaison de communication (V1, V2) sont transmis via un chemin de signalisation de la première liaison de communication (V1).

8. Procédé selon l'une des revendications 1 à 6, **caractérisé en ce que** des messages à transmettre aux fins d'une commutation de la première sur la deuxième liaison de communication (V1, V2) sont transmis via un chemin de signalisation de la deuxième liaison de communication (V2).
